(19) Europäisches Patentamt
European Patent Office
Office européen des brevets

(11) EP 4 274 323 A1

(12) EUROPEAN PATENT APPLICATION
published in accordance with Art. 153(4) EPC

(43) Date of publication:
08.11.2023 Bulletin 2023/45

(51) International Patent Classification (IPC):
*H04W 56/00* (2009.01)

(21) Application number: 20967936.4

(86) International application number:
PCT/CN2020/142556

(22) Date of filing: 31.12.2020

(87) International publication number:
WO 2022/141598 (07.07.2022 Gazette 2022/27)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: Beijing Xiaomi Mobile Software Co.,
Ltd.
Beijing 100085 (CN)

(72) Inventor: JIANG, Xiaowei
Beijing 100085 (CN)

(74) Representative: dompatent von Kreisler Selting
Werner -
Partnerschaft von Patent- und Rechtsanwälten
mbB
Deichmannhaus am Dom
Bahnhofsvorplatz 1
50667 Köln (DE)

(54) **UPLINK TIMING ADVANCE DETERMINING METHOD AND APPARATUS, AND COMMON TIMING-RELATED INFORMATION BROADCASTING METHOD AND APPARATUS**

(57) The present application relates to an uplink timing advance determining method, applicable to a terminal. The method comprises: receiving common timing-related information broadcast by a cell; and determining uplink timing advance according to the common timing-related information. According to the present application, a cell does not need to indicate all uplink timing advance, but only needs to indicate common timing-related information, the common timing-related information is not greater than the uplink timing advance, and thus, it is beneficial to reducing the amount of information to be indicated. In addition, by broadcasting valid time-related information of common timing-related information, when determining according to the valid time-related information that the received common timing-related information is valid, the terminal does not need to acquire system information carrying the common timing-related information; thus, even if the common time offset is changed, the cell does not need to continuously notify the terminal of the changed common time offset, thereby reducing the signaling overhead and the power consumption of the terminal.

```
┌─────────────────────────────────────────────────────────────┐
│ receiving common timing-related information broadcasted by a cell │──  S101
└─────────────────────────────────────────────────────────────┘
                              │
                              ▼
┌─────────────────────────────────────────────────────────────┐
│ determining the uplink timing advance based on the common      │──  S102
│ timing-related information                                      │
└─────────────────────────────────────────────────────────────┘
```

**FIG. 1**

## Description

## TECHNICAL FIELD

The disclosure relates to the field of communication technologies, particularly to a method for determining an uplink timing advance, a method for broadcasting common timing-related information, an apparatus for determining an uplink timing advance, an apparatus for broadcasting common timing-related information, an electronic device and a computer-readable storage medium.

## BACKGROUND

To enable a terminal to perform an uplink synchronization, a base station may indicate a timing advance to the terminal, and the terminal may obtain the uplink synchronization based on the timing advance indicated by the base station. However, a size of the timing advance that the base station can indicate is limited and may not exceed 2 milliseconds maximally.

Furthermore, in non-terrestrial networks (NTN), the terminal and the ground base station communicate with each other via a satellite. Since the satellite is in the air, it takes a long duration to send signals from the ground to the satellite and then from the satellite to the ground, so a large delay can occur, and the maximum delay can reach more than 500 milliseconds, which is far greater than the timing advance that can be indicated by the base station.

## SUMMARY

In view of this, embodiments of the disclosure provide a method for determining an uplink timing advance, a method for broadcasting common timing-related information, an apparatus for determining an uplink timing advance, an apparatus for broadcasting common timing-related information, an electronic device and a computer-readable storage medium, to solve the technical problems in the related art.

According to a first aspect of embodiments of the disclosure, a method for determining an uplink timing advance is provided. The method is applicable to a terminal. The method includes:

receiving common timing-related information broadcasted by a cell; and
determining the uplink timing advance based on the common timing-related information.

According to a second aspect of embodiments of the disclosure, a method for broadcasting common timing-related information is provided. The method is applicable to a cell. The method includes:
broadcasting the common timing-related information, in which the common timing-related information is provided for a terminal in the cell to determine an uplink timing advance.

According to a third aspect of embodiments of the disclosure, an apparatus for determining an uplink timing advance is provided. The apparatus is applicable to a terminal. The apparatus includes:

a timing information receiving module, configured to receive common timing-related information broadcasted by a cell; and

a timing advance determining module, configured to determine the uplink timing advance based on the common timing-related information.

According to a fourth aspect of embodiments of the disclosure, an apparatus for broadcasting common timing-related information is provided. The apparatus is applicable to a cell. The apparatus includes:
a timing broadcast module, configured to broadcast the common timing-related information, in which the common timing-related information is provided for a terminal in the cell to determine an uplink timing advance.

According to a fifth aspect of embodiments of the disclosure, an electronic device is provided and includes:

a processor; and

a memory for storing instructions executable by the processor;

in which the processor is configured to perform the above method for determining an uplink timing advance, and/or the above method for broadcasting common timing-related information.

According to a sixth aspect of embodiments of the disclosure, a computer-readable storage medium with a computer program stored thereon is provided. The program performs steps in the above method for determining an uplink timing advance and/or in the above method for broadcasting common timing-related information, when executed by a processor.

According to the embodiments of the disclosure, the cell only needs to indicate the common timing-related information without necessarily indicating all uplink timing advances, and the common timing-related information is no greater than the uplink timing advance. Therefore, it is beneficial to reducing an information amount indicated.

In addition, by broadcasting valid time-related information of the common timing-related information, the terminal does not need to obtain system information carrying the common timing-related information in response to determining that the common timing-related information that has received is valid based on the valid time-related information, so that even if a common time offset varies, the cell does not need to continuously inform the terminal of the varied common time offset, thereby reducing a signaling overhead and a power consumption of the terminal.

**BRIEF DESCRIPTION OF THE DRAWINGS**

In order to more clearly illustrate technical solutions in embodiments of the disclosure, a brief description of drawings used in descriptions of the embodiments is given below. Obviously, the drawings in the following descriptions are only some embodiments of the disclosure, and for a person skilled in the art, other drawings may be obtained according to these drawings without creative labor.

FIG. 1 is a schematic flowchart illustrating a method for determining an uplink timing advance according to some embodiments the disclosure.

FIG. 2 is a schematic flowchart illustrating another method for determining an uplink timing advance according to some embodiments the disclosure.

FIG. 3 is a schematic flowchart illustrating yet another method for determining an uplink timing advance according to some embodiments the disclosure.

FIG. 4 is a schematic flowchart illustrating yet another method for determining an uplink timing advance according to some embodiments the disclosure.

FIG. 5 is a schematic flowchart illustrating yet another method for determining an uplink timing advance according to some embodiments the disclosure.

FIG. 6 is a schematic flowchart illustrating yet another method for determining an uplink timing advance according to some embodiments the disclosure.

FIG. 7 is a schematic flowchart illustrating yet another method for determining an uplink timing advance according to some embodiments the disclosure.

FIG. 8 is a schematic flowchart illustrating yet another method for determining an uplink timing advance according to some embodiments the disclosure.

FIG. 9 is a schematic flowchart illustrating yet another method for determining an uplink timing advance according to some embodiments the disclosure.

FIG. 10 is a schematic flowchart illustrating yet another method for determining an uplink timing advance according to some embodiments the disclosure.

FIG. 11 is a schematic flowchart illustrating yet another method for determining an uplink timing advance according to some embodiments the disclosure.

FIG. 12 is a schematic flowchart illustrating yet another method for determining an uplink timing advance according to some embodiments the disclosure.

FIG. 13 is a schematic flowchart illustrating a method for broadcasting common timing-related information according to some embodiments the disclosure.

FIG. 14 is a schematic flowchart illustrating another method for broadcasting common timing-related information according to some embodiments the disclosure.

FIG. 15 is a schematic flowchart illustrating yet another method for broadcasting common timing-related information according to some embodiments the disclosure.

FIG. 16 is a schematic flowchart illustrating yet another method for broadcasting common timing-related information according to some embodiments the disclosure.

FIG. 17 is a schematic flowchart illustrating yet another method for broadcasting common timing-related information according to some embodiments the disclosure.

FIG. 18 is a schematic flowchart illustrating yet another method for broadcasting common timing-related information according to some embodiments the disclosure.

FIG. 19 is a schematic flowchart illustrating yet another method for broadcasting common timing-related information according to some embodiments the disclosure.

FIG. 20 is a schematic flowchart illustrating yet another method for broadcasting common timing-related information according to some embodiments the disclosure.

FIG. 21 is a schematic block diagram illustrating an apparatus for determining an uplink timing advance according to some embodiments the disclosure.

FIG. 22 is a schematic block diagram illustrating another apparatus for determining an uplink timing advance according to some embodiments the disclosure.

FIG. 23 is a schematic block diagram illustrating yet another apparatus for determining an uplink timing advance according to some embodiments the disclosure.

FIG. 24 is a schematic block diagram illustrating yet another apparatus for determining an uplink timing advance according to some embodiments the disclosure.

FIG. 25 is a schematic block diagram illustrating an apparatus for broadcasting common timing-related information according to some embodiments the disclosure.

FIG. 26 is a schematic block diagram illustrating another apparatus for broadcasting common timing-related information according to some embodiments the disclosure.

FIG. 27 is a schematic block diagram illustrating yet another apparatus for broadcasting common timing-related information according to some embodiments the disclosure.

FIG. 28 is a schematic block diagram illustrating yet another apparatus for broadcasting common timing-related information according to some embodiments the disclosure.

FIG. 29 is a schematic block diagram illustrating yet another apparatus for broadcasting common timing-related information according to some embodiments the disclosure.

FIG. 30 is a schematic block diagram illustrating yet another apparatus for broadcasting common timing-related information according to some embodiments the disclosure.

FIG. 31 is a schematic block diagram illustrating yet another apparatus for broadcasting common timing-related information according to some embodiments the disclosure.

FIG. 32 is a schematic block diagram illustrating yet another apparatus for broadcasting common timing-related information according to some embodiments the disclosure.

FIG. 33 is a schematic block diagram illustrating a device for broadcasting common timing-related information according to some embodiments the disclosure.

FIG. 34 is a schematic block diagram illustrating a device for determining an uplink timing advance according to some embodiments the disclosure.

## DETAILED DESCRIPTION

Technical solutions in embodiments of the disclosure will be clearly and completely described below with reference to the accompanying drawings in some embodiments of the disclosure. Obviously, the described embodiments are only a part of the embodiments of the disclosure, but not all of the embodiments. Based on the embodiments in the disclosure, all other embodiments obtained by a person skilled in the art without creative efforts shall fall within the protection scope of the disclosure.

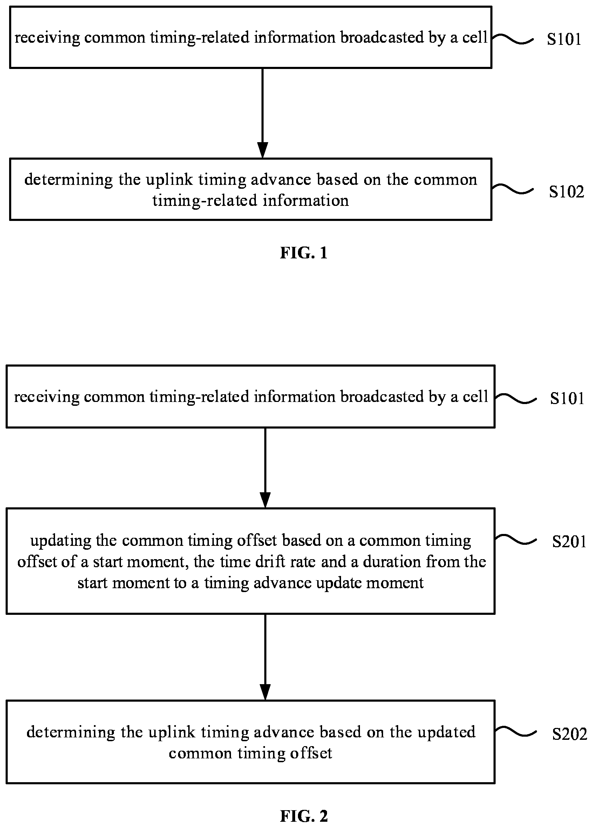

FIG. 1 is a schematic flowchart illustrating a method for determining an uplink timing advance according to some embodiments the disclosure. The method for determining an uplink timing advance as illustrated in some embodiments is applicable to a terminal. The terminal includes but is not limited to an electronic device such as a mobile phone, a tablet computer, a wearable device, a sensor or an Internet of Things device. The terminal, as a user equipment (UE), may communicate with a base station. The base station includes but is not limited to a fourth generation (4G) base station, a fifth generation (5G) base station or a sixth generation (6G) base station. In some embodiments, the base station may be a base station to which a method for broadcasting common timing-related information as described in any subsequent embodiment is applied.

In some embodiments, the terminal and the base station may communicate with each other in a non-terrestrial network. The terminal and the base station may be located on the ground. The terminal may communicate with the base station through an aerial device. For example, the base station sends information to the aerial device, and the aerial device sends the information to the terminal. The aerial device includes but is not limited to a satellite, an unmanned aerial vehicle (UAV) or an aerial platform. The aerial device may move in the air.

A cell described in the following embodiments may refer to a signal coverage area of the aerial device. The base station may send information to the aerial device and the aerial device sends the information to the terminal in the cell by means of broadcasting or unicasting.

As illustrated in FIG. 1, a method for determining an uplink timing advance may include the following steps.

At step S101, common timing-related information broadcasted by a cell is received.

At step S102, the uplink timing advance is determined based on the common timing-related information.

In some embodiments, the cell may broadcast the common timing-related information. The terminal may receive the common timing-related information broadcasted by the cell when the terminal is in the signal coverage range of the cell. Furthermore, the terminal may determine the uplink timing advance based on the common timing-related information. The common timing-related information broadcasted by the cell may be determined by the base station corresponding to the cell as required, which is not limited in embodiments of the disclosure.

In some embodiments, the common timing-related information includes at least one of:

a common timing offset or a time drift rate.

The common timing offset is obtained at least based on the common timing drifting. The common timing offset may be a round trip time (RTT) between the base station and a ground reference point. For example, a distance from the aerial device to the ground reference point is d0, a distance from the aerial device to the base station is d0_F, and a signal propagation speed is equal to a speed of light c, thus the common timing offset is equal to 2*(d0+d0_F)/c or is obtained at least based on 2*(d0+d0_F)/c.

According to the embodiments of the disclosure, the cell only needs to indicate the common timing-related information without necessarily indicating all uplink timing advances, and the common timing-related information is no greater than the uplink timing advance. Therefore, it is beneficial to reducing an information amount indicated.

In some embodiments, taking the common timing-related information including the common timing offset $X$ for an example, the terminal may determine the uplink timing advance (TA) by the following equation of:

$$TA = (N_{TA} + N_{TA,offset}[+X]) \times T_c[+X],$$

where, $X$ is the common timing offset, $N_{TA}$ is obtained based on a specific timing advance of the terminal (UE specific TA), $N_{TA,offset}$ is a TA offset which may be a known defined value, and $T_c$ is a known defined value.

It is noted that $X$ in the above formula only appears once. For example, if it appears in the parentheses in the formula, it is $(N_{TA} + N_{TA,offset} + X) \times T_c$. In this case, $X$ can be a unitless quantity. If it appears in the end of the formula, it is $TA = (N_{TA} + N_{TA,offset}) \times T_c + X$. In this case, the unit of $X$ may be a time unit, such as millisecond, second, frame or the like.

In some embodiments, after the uplink timing advance is determined, the terminal may perform an uplink synchronization based on the uplink timing advance when sending uplink information. For example, pre-compensating a first message Msgl/MsgA for sending random access based on the determined uplink timing advance when performing a random access.

In some embodiments, the common timing offset broadcasted by the cell may include two parts. One part is the common timing offset that needs the terminal to compensate, referred to as $X_1$, and the other part is the common timing offset that needs the network (such as satellite, base station) to compensate, referred to as $X_2$. The terminal may determine the uplink timing advance according to the above embodiments, based on the common timing offset $X_1$ which needs the terminal to compensate. In addition, the cell can also broadcast a sum of $X_1$ and $X_2$, and one of $X_1$ and $X_2$, the other of $X_1$ and $X_2$ can be obtained by the terminal through subtraction.

In some embodiments, the common timing-related information may be carried in system information broadcasted by the cell. For example, it may be carried in a system information block (SIB1) or other system information.

The cell may inform the terminal whether the system information is updated by broadcasting paging. The terminal may obtain the updated common timing-related information from the system information when it is determined that the system information is updated based on the paging. When it is determined that the system information is not updated based on the paging information, it is not necessary to obtain the system information, to reduce a power consumption of the terminal.

When the common timing-related information is carried in other system information, and when it is determined that the system information is updated based on the paging, the terminal may further determine whether the common timing-related information carried in the other system information is updated based on a preset field in the SIB1 such as a valueTag in si-SchedulingInfo. When the common timing-related information in the other system information is not updated, the valueTag may remain unchanged, and when the common timing-related information in the other system information is updated, the valueTag may change.

FIG. 2 is a schematic flowchart illustrating another method for determining an uplink timing advance according to some embodiments the disclosure. As illustrated in FIG. 2, determining the uplink timing advance based on the common timing-related information includes the following steps.

At step S201, the common timing offset is updated based on a common timing offset of a start moment, the time drift rate and a duration from the start moment to a timing advance update moment.

At step S202, the uplink timing advance is determined based on the updated common timing offset.

In some embodiments, the common timing-related information may further include the time drift rate in addition to the common timing offset. The time drift rate is a variation of the common timing offset per unit time or may be a variation of the uplink timing advance per unit time.

Taking the time drift rate being the variation of the common timing offset per unit time as an example, the common timing offset $X_0$ at the start moment and the duration $t$ from the start moment to the update moment may be determined first, so that $X_0$ may be updated based on the time drift rate R to obtain the updated common timing offset $X = X_0 + t \times R$, and further the uplink timing advance is determined based on the updated common timing offset.

Taking the time drift rate being the variation of the uplink timing advance per unit time as an example, the common timing offset $TA_0$ at the start moment and the duration $t$ from the start moment to the update moment may be determined, so that $TA_0$ may be updated based on the time drift rate R to obtain the updated common timing offset $TA=TA_0+t\times R$.

It should be noted that the update moment may be periodic, and the specific period may be indicated by a network or pre-stored by the terminal; and the update moment may further be non-periodic, so that a specific update moment may be indicated by the network or the update moment may be determined based on an update offset, for example, the start moment plus the update offset equals the update moment, and the update offset may be indicated by the network or pre-stored by the terminal.

In some embodiments, the above unit of time includes at least one of:

frame, subframe, time slot, second, millisecond or system information modification period.

In some embodiments, the start moment includes at least one of:

a boundary of a system information window located by a moment at which the common timing-related information is received, for example, a start boundary of the system information window or an end boundary of the system information window;

a boundary of a nearest system frame number previous to or following a moment at which the common timing-related information is received, for example, a start boundary of the system frame number or an end boundary of the system frame number; or

a boundary of a transmission period of a system information block (SIB1) previous to or following a moment at which the common timing-related information is received, for example, a start boundary of the transmission period or an end boundary of the transmission period, in which the SIB 1 is configured to carry the common timing-related information.

It needs to be noted that a definition of the start moment is applicable to the start moment in all embodiments of the disclosure.

Since the aerial device such as the satellite is generally in high speed motion, the common timing offset is constantly varying as the aerial device moves. If the terminal is informed of the varied common timing offset, a lot of signaling overheads may be caused and a power consumption of the terminal may be provided. To solve the problem, valid time-related information is provided in the following embodiments.

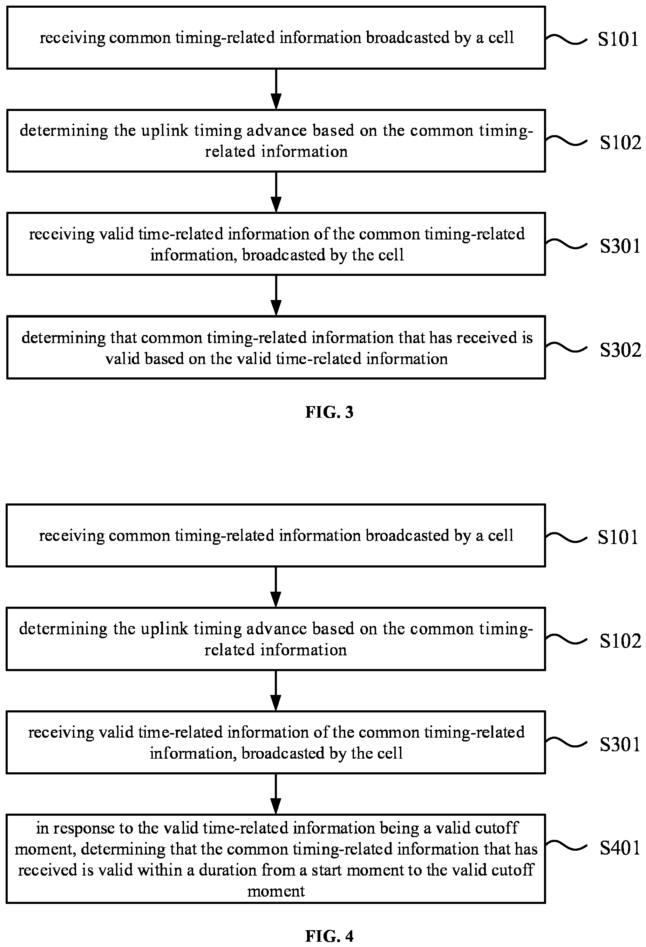

FIG. 3 is a schematic flowchart illustrating yet another method for determining an uplink timing advance according to some embodiments the disclosure. As illustrated in FIG. 3, the method further includes the following steps.

At step S301, valid time-related information of the common timing-related information, broadcasted by the cell, is received.

At step S302, it is determined that common timing-related information that has received is valid based on the valid time-related information.

In some embodiments, the common timing-related information may have a certain timeliness and the specific valid time-related information about timeliness may be broadcasted by the cell. Further, the terminal may determine whether the common timing-related information that has received is valid based on the valid time-related information.

In some embodiments, the terminal does not need to obtain the system information carrying the common timing-related information in response to determining that the common timing-related information that has received is valid based on the valid time-related information, to reduce the power consumption.

Accordingly, even if the common time offset varies, the cell does not need to continuously inform the terminal of the varied common time offset, which is beneficial to reducing the signaling overhead and the power consumption of the terminal.

It should be noted that within the valid time range of the common timing-related information, the cell may further update the common timing-related information as needed and inform the terminal that the system information varies based on paging, so that even if the terminal determines that the common timing-related information that has received is valid, it still needs to receive the system information to obtain updated common timing-related information.

In addition, the common timing-related information may include the common timing offset and the time drift rate, and the valid time-related information is only applicable to the common timing offset, only applicable to the time drift rate or applicable to the common timing offset and the time drift rate.

FIG. 4 is a schematic flowchart illustrating yet another method for determining an uplink timing advance according to some embodiments the disclosure. As illustrated in FIG. 4, determining that the common timing-related information that has received is valid based on the valid time-related information includes the following step.

At step S401, in response to the valid time-related information being a valid cutoff moment, it is determined that the common timing-related information that has received is valid within a duration from the start moment to the valid cutoff moment.

In some embodiments, the valid time-related information may be the valid cutoff moment, so that the terminal may determine that the common timing-related information that has received is valid within the duration from the start moment to the valid cutoff moment.

Before the valid cutoff moment, the cell does not need to inform the terminal of the system information update by broadcasting paging, and the terminal does not need to obtain the system information carrying the common timing-related information, to reduce the power consumption, and after the valid cutoff moment, the cell may inform the terminal of the system information update by broadcasting paging, and the terminal may obtain the system information carrying the common timing-related information, to determine new common timing-related information.

The terminal may determine the uplink timing advance based on the common timing-related information that has received before the valid cutoff moment. When the common timing-related information includes the time drift rate, the common timing offset and/or the uplink timing advance may be updated based on the time drift rate before the valid cutoff moment.

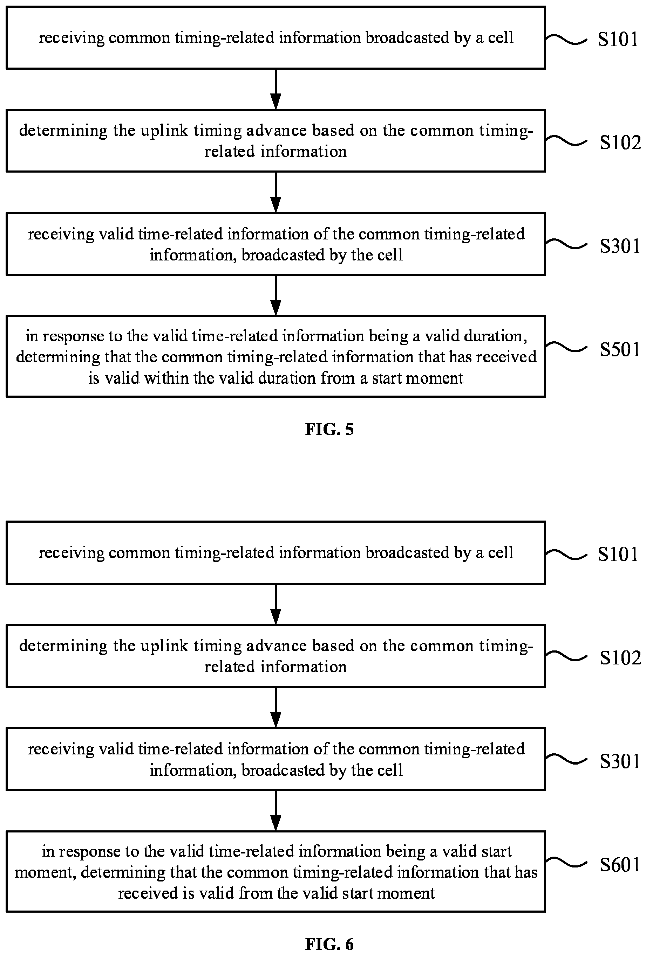

FIG. 5 is a schematic flowchart illustrating yet another method for determining an uplink timing advance according to some embodiments the disclosure. As illustrated in FIG. 5, determining that the common timing-related information that has received is valid based on the valid time-related information includes the following step.

At step S501, in response to the valid time-related information being a valid duration, it is determined that the common timing-related information that has received is valid within the valid duration from the start moment.

In some embodiments, the valid time-related information may be the valid duration, so that the terminal may determine that the common timing-related information that has received is valid within the valid duration from the start moment.

Within the duration, the cell does not need to inform the terminal of the system information update by broadcasting paging, and the terminal does not need to obtain the system information carrying the common timing-related information, to reduce the power consumption, and after the duration, the cell may inform the terminal of the system information update by broadcasting paging, and the terminal may obtain the system information carrying the common timing-related information, to determine new common timing-related information.

The terminal may determine the uplink timing advance based on the common timing-related information that has received within the valid duration from the start moment. When the common timing-related information includes the time drift rate, the common timing offset and/or the uplink timing advance may be updated based on the time drift rate before the valid cutoff moment.

FIG. 6 is a schematic flowchart illustrating yet another method for determining an uplink timing advance according to some embodiments the disclosure. As illustrated in FIG. 6, determining that the common timing-related information that has received is valid based on the valid time-related information includes the following step.

At step S601, in response to the valid time-related information being a valid start moment, it is determined that the common timing-related information that has received is valid from the valid start moment.

In some embodiments, the valid time-related information may be the valid start moment, so that the terminal may determine that the common timing-related information that has received is valid starting from the valid start moment.

The cell may still broadcast paging starting from the valid start moment, and the terminal may determine whether the system information is updated based on the received paging, and may obtain the system information carrying the common timing-related information in response to determining that the system information is updated, to determine new common timing-related information.

The terminal may determine the uplink timing advance based on the common timing-related information that has received starting from the valid start moment to a moment of acquiring the new common timing-related information from the system information at the next time. When the common timing-related information includes the time drift rate, the common timing offset and/or the uplink timing advance may be updated based on the time drift rate.

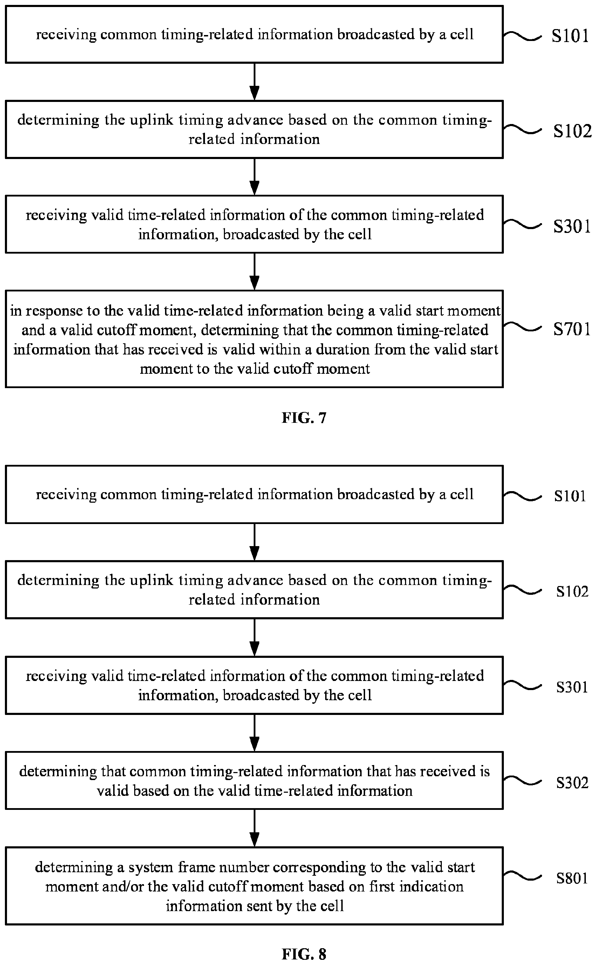

FIG. 7 is a schematic flowchart illustrating yet another method for determining an uplink timing advance according to some embodiments the disclosure. As illustrated in FIG. 7, determining that the common timing-related information that has received is valid based on the valid time-related information includes the following step.

At step S701, in response to the valid time-related information being a valid start moment and a valid cutoff moment, it is determined that the common timing-related information that has received is valid within a duration from the valid start moment to the valid cutoff moment.

In some embodiments, the valid time-related information may be the valid start moment and the valid cutoff moment, so that the terminal may determine that the common timing-related information that has received is valid within the duration from the valid start moment to the valid cutoff moment.

Within the duration, the cell does not need to inform the terminal of the system information update by broadcasting paging, and the terminal does not need to obtain the system information carrying the common timing-related information, to reduce the power consumption, and after the duration, the cell may inform the terminal of the system information update by broadcasting paging, and the terminal may obtain the system information carrying the common timing-related information, to determine new common timing-related information.

The terminal may determine the uplink timing advance based on the common timing-related information that has received within the duration from the valid start moment to the valid cutoff moment. When the common timing-related information includes the time drift rate, the common timing offset and/or the uplink timing advance may be updated based on the time drift rate before the valid cutoff moment.

FIG. 8 is a schematic flowchart illustrating yet another method for determining an uplink timing advance according to some embodiments the disclosure. As illustrated in FIG. 8, the valid time-related information includes a valid start moment and/or a valid cutoff moment, and the method further includes the following step.

At step S801, a system frame number corresponding to the valid start moment and/or the valid cutoff moment is determined based on first indication information sent by the cell.

In some embodiments, the cell may indicate the system frame number based on the first indication information, so that the terminal determines the valid start moment and/or the valid cutoff moment, that is, the indicated system frame number is the valid start moment and/or the valid cutoff moment. The system frame number (SFN) may be a single SFN or may be a combination of a hyper SFN and a low SFN. When the valid start moment and/or the valid cutoff moment is indicated in this way, the cell is required to continuously broadcast a current SFN.

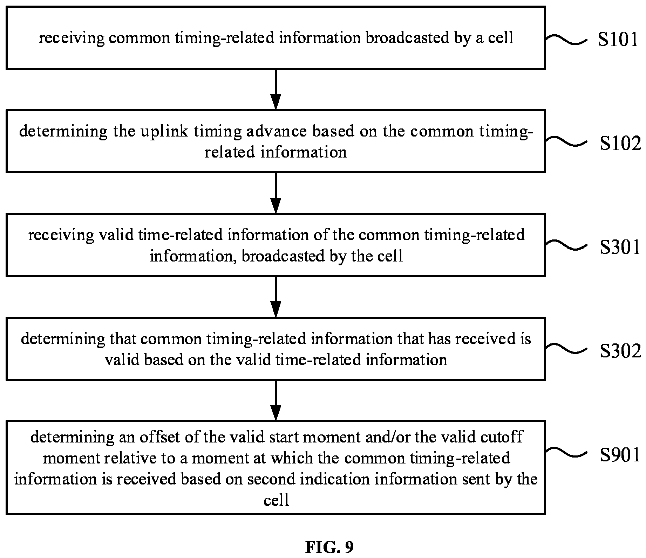

FIG. 9 is a schematic flowchart illustrating yet another method for determining an uplink timing advance according to some embodiments the disclosure. As illustrated in FIG. 9, the valid time-related information includes a valid start moment and/or a valid cutoff moment, and the method further includes the following step.

At step S901, an offset of the valid start moment and/or the valid cutoff moment relative to a moment at which the common timing-related information is received is determined based on second indication information sent by the cell.

In some embodiments, the cell may indicate the offset based on the second indication information, so that the terminal determines by the valid start moment and/or the valid cutoff moment. The offset indicated is relative to the moment at which the common timing-related information is received.

The moment at which the common timing-related information is received may be same as a definition in the start moment in the above embodiments, which will not be repeated herein.

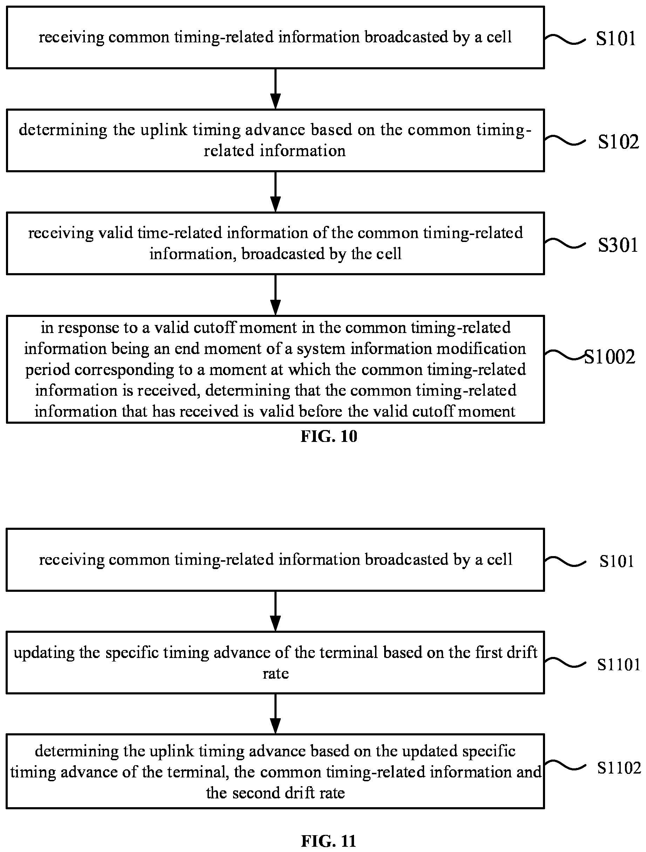

FIG. 10 is a schematic flowchart illustrating yet another method for determining an uplink timing advance according to some embodiments the disclosure. As illustrated in FIG. 10, determining that the common timing-related information that has received is valid based on the valid time-related information includes the following step.

At step S1001, in response to a valid cutoff moment in the common timing-related information being an end moment of a system information modification period corresponding to a moment at which the common timing-related information is received, it is determined that the common timing-related information that has received is valid before the valid cutoff moment.

In some embodiments, the common timing-related information may include the valid cutoff moment, and the valid cutoff moment may be the end moment of the system information modification period corresponding to the moment at which the common timing-related information received. It may be determined that the common timing-related information that has received is valid before the valid cutoff moment. It needs to be noted that, in this case, the cell may not necessarily broadcast a specific valid cutoff moment and only needs to inform the terminal that the common timing-related information has the valid cutoff moment, and the terminal may automatically take the end moment of the system information modification period corresponding to the moment at which the common timing-related information of information is received as the valid cutoff moment, which is beneficial to reducing an information amount of the common timing-related information broadcasted by the cell.

Before the valid cutoff moment, the cell does not need to inform the terminal of the system information update by broadcasting paging, and the terminal does not need to obtain the system information carrying the common timing-related information, to reduce the power consumption, and after the valid cutoff moment, the cell may inform the terminal of the system information update by broadcasting paging, and the terminal may obtain the system information carrying the common timing-related information, to determine new common timing-related information.

The terminal may determine the uplink timing advance based on the common timing-related information that has received before the valid cutoff moment. When the common timing-related information includes the time drift rate, the common timing offset and/or the uplink timing advance may be updated based on the time drift rate before the valid cutoff moment.

FIG. 11 is a schematic flowchart illustrating yet another method for determining an uplink timing advance according to some embodiments the disclosure. As illustrated in FIG. 11, the time drift rate includes a first drift rate and a second drift rate, and the uplink timing advance is further calculated based on a specific timing advance of the terminal, and determining the uplink timing advance based on the common timing-related information includes the following steps.

At step S1101, the specific timing advance of the terminal is updated based on the first drift rate.

At step S1102, the uplink timing advance is determined based on the updated specific timing advance of the terminal, the common timing-related information and the second drift rate.

In some embodiments, the terminal may calculate the uplink timing advance based on the specific timing advance. For example, the terminal may calculate based on a formula of

$$TA = (N_{TA} + N_{TA,offset}[+X]) \times T_c[+X]$$

In this case, the time drift rate may include the first drift rate $R1$ and the second drift rate $R2$. The first drift rate is applicable to the specific timing advance, and the second drift rate is applicable to the common time drift rate or the common timing advance.

The specific timing advance may be updated based on the first drift rate, the common timing offset $N_{TA0}$ at the start moment and the duration $t$ from the start moment to the update moment may be determined first, so that $N_{TA0}$ may be updated based on the first drift rate $R1$ to obtain the updated specific timing advance $N_{TA}= N_{TA0}+t \times R1$.

Taking the second drift rate being the variation of the common timing offset per unit time as an example, the common timing offset $X_0$ at the start moment and the duration $t$ from the start moment to the update moment may be determined first, so that $X_0$ may be updated based on the second drift rate $R2$ to obtain an updated common timing offset $X=X_0+t \times R2$. Further the uplink timing advance may be determined based on the updated specific timing advance of the terminal and the updated common timing offset.

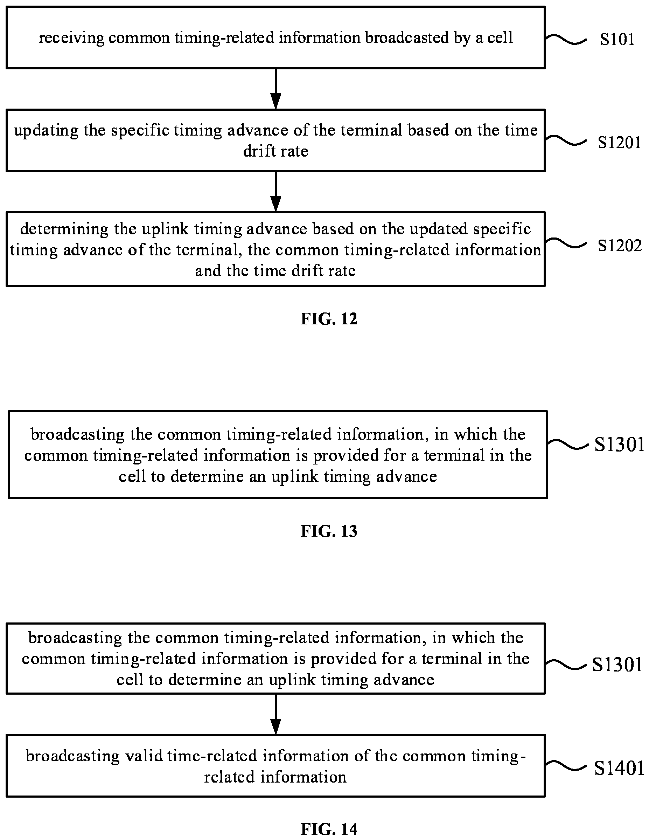

FIG. 12 is a schematic flowchart illustrating yet another method for determining an uplink timing advance according to some embodiments the disclosure. As illustrated in FIG. 12, the uplink timing advance is further calculated based on a specific timing advance of the terminal, and determining the uplink timing advance based on the common timing-related information includes the following steps.

At step S1201, the specific timing advance of the terminal is updated based on the time drift rate.

At step S1202, the uplink timing advance is determined based on the updated specific timing advance of the terminal, the common timing-related information and the time drift rate.

In some embodiments, the terminal may calculate the uplink timing advance based on the specific timing advance. For example, the terminal may calculate based on a formula of

$$TA = (N_{TA} + N_{TA,offset}[+X]) \times T_c[+X]$$

In this case, the time drift rate R is applicable to the specific timing advance and is also applicable to the common time drift rate or the common timing advance.

The specific timing advance may be updated based on the time drift rate. The common timing offset $N_{TA0}$ at the start moment and the duration $t$ from the start moment to the update moment may be determined first, so that $N_{TA0}$ may be updated based on the time drift rate R to obtain the updated specific timing advance $N_{TA}= N_{TA0}+t \times R$.

Taking the second time drift rate being the variation of the common timing offset per unit time as an example, the common timing offset $X_0$ at the start moment and the duration $t$ from the start moment to the update moment may be determined first, so that $X_0$ may be updated based on the time drift rate R to obtain the updated common timing offset $X=X_0+t \times R$. Further the uplink timing advance may be determined based on the updated specific timing advance of the terminal and the updated common timing offset.

FIG. 13 is a schematic flowchart illustrating a method for broadcasting common timing-related information according to some embodiments the disclosure. The method for broadcasting common timing-related information as illustrated in some embodiments is applicable to a cell, for example, a network side device corresponding to the cell. The network side device includes but is not limited to a terrestrial base station or an aerial device in a non-terrestrial network. The base station includes but is not limited to a 4G base station, a 5G base station or a 6G base station. The base station may communicate with a terminal as a UE. The terminal includes but is not limited to an electronic device such as a mobile phone, a tablet computer, a wearable device, a sensor or an Internet of things device. In some embodiments, the terminal may be a terminal to which the method for determining an uplink timing advance in any embodiment as described above is applied.

In some embodiments, the terminal and the base station may be located on the ground. The terminal may communicate with the base station through an aerial device. For example, the base station sends information to the aerial device and the aerial device sends the information to the terminal. The aerial device includes but is not limited to a satellite, a UAV or an aerial platform. The aerial device may move in the air.

As illustrated in FIG. 13, the method for broadcasting common timing-related information includes the following step.

At step S1301, the common timing-related information is broadcast. The common timing-related information is provided for a terminal in the cell to determine an uplink timing advance.

In some embodiments, the cell may broadcast the common timing-related information. The terminal may receive the common timing-related information broadcasted by the cell when the terminal is in the signal coverage range of the cell. Furthermore, the terminal may determine the uplink timing advance based on the common timing-related information. The common timing-related information broadcasted by the cell may be determined by the base station corresponding to the cell as required, which is not limited in embodiments of the disclosure.

In some embodiments, the common timing-related information includes at least one of:
a common timing offset or a time drift rate.

The common timing offset is obtained at least based on the common timing drifting. The common timing offset may be a round trip time (RTT) between the base station and a ground reference point. For example, a distance from the aerial device to the ground reference point is d0, a distance from the aerial device to the base station is d0_F, and a signal propagation speed is equal to a speed of light c, thus the common timing offset is equal to 2*(d0+d0_F)/c or is obtained at least based on 2*(d0+d0_F)/c.

According to the embodiments of the disclosure, the cell only needs to indicate the common timing-related information without necessarily indicating all uplink timing advances, and the common timing-related information is no greater than the uplink timing advance. Therefore, it is beneficial to reducing an information amount indicated.

In some embodiments, taking the common timing-related information including the common timing offset $X$ for an example, the terminal may determine the uplink timing advance (TA) by the following equation of:

$$TA = (N_{TA} + N_{TA,offset}[+X]) \times T_c[+X] ,$$

where, $X$ is the common timing offset, $N_{TA}$ is obtained based on a UE specific TA, $N_{TA,offset}$ is a TA offset defined in 3GPP TS38.213 section 4.2, and $T_c$ is a value defined in 3GPP TS38.211 section 4.1.

It is noted that X in the above formula only appears once. For example, if it appears in the parentheses in the formula, it is $(N_{TA} + N_{TA,offset} + X) \times T_c$. In this case, $X$ can be a unitless quantity. If it appears in the end of the formula, it is $TA = (N_{TA} + N_{TA,offset}) \times T_c + X$. In this case, the unit of $X$ may be a time unit, such as millisecond, second, frame or the like.

In some embodiments, after the uplink timing advance is determined, the terminal may perform an uplink synchronization based on the uplink timing advance when sending uplink information. For example, pre-compensating a first message Msg1/MsgA for sending random access based on the determined uplink timing advance when performing a random access.

In some embodiments, the common timing offset broadcasted by the cell may include two parts. One part is the common timing offset that needs the terminal to compensate, referred to as $X_1$, and the other part is the common timing offset that needs the network (such as satellite, base station) to compensate, referred to as $X_2$. The terminal may determine the uplink timing advance according to the above embodiments, based on the common timing offset $X_1$ which needs the terminal to compensate. In addition, the cell can also broadcast a sum of $X_1$ and $X_2$, and one of $X_1$ and $X_2$, the other of $X_1$ and $X_2$ can be obtained by the terminal through subtraction.

In some embodiments, the common timing-related information may be carried in system information broadcasted by the cell. For example, it may be carried in a system information block (SIB1) or other system information.

The cell may inform the terminal whether the system information is updated by broadcasting paging. The terminal may obtain the updated common timing-related information from the system information when it is determined that the system information is updated based on the paging. When it is determined that the system information is not updated based on the paging information, it is not necessary to obtain the system information, to reduce a power consumption of the terminal.

When the common timing-related information is carried in other system information, and when it is determined that the system information is updated based on the paging, the terminal may further determine whether the common timing-related information carried in the other system information is updated based on a preset field in the SIB1 such as a valueTag in si-SchedulingInfo. When the common timing-related information in the other system information is not updated, the valueTag may remain unchanged, and when the common timing-related information in the other system information is updated, the valueTag may change.

FIG. 14 is a schematic flowchart illustrating another method for broadcasting common timing-related information according to some embodiments the disclosure. As illustrated in FIG. 14, the method further includes the following step.

At step S1401, valid time-related information of the common timing-related information, is broadcasted.

In some embodiments, the common timing-related information may have a certain timeliness and the specific valid time-related information about timeliness may be broadcasted by the cell. Further, the terminal may determine whether the common timing-related information that has received is valid based on the valid time-related information.

In addition, the terminal does not need to obtain the system information carrying the common timing-related information in response to determining that the common timing-related information that has received is valid based on the valid time-related information, to reduce the power consumption.

It should be noted that within the valid time range of the common timing-related information, the cell may further update the common timing-related information as needed and inform the terminal that the system information varies based on paging, so that even if the terminal determines that the common timing-related information that has received is valid, it still needs to receive the system information to obtain updated common timing-related information.

In addition, the common timing-related information may include the common timing offset and the time drift rate, and the valid time-related information is only applicable to the common timing offset, only applicable to the time drift rate or applicable to the common timing offset and the time drift rate.

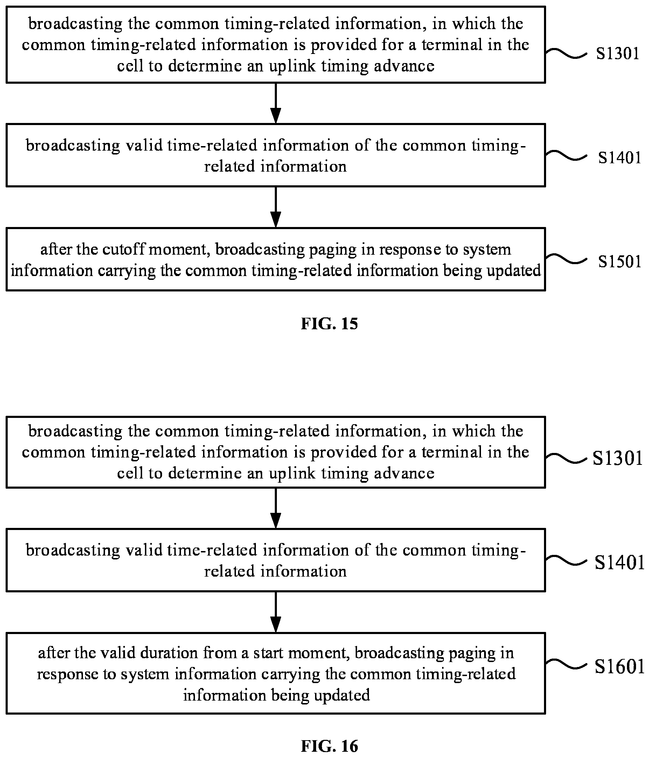

FIG. 15 is a schematic flowchart illustrating yet another method for broadcasting common timing-related information according to some embodiments the disclosure. As illustrated in FIG. 15, the valid time-related information includes a valid cutoff moment, and the method further includes the following step.

At step S1501, after the cutoff moment, paging is broadcasted in response to system information carrying the common timing-related information being updated.

In some embodiments, the valid time-related information may be the valid cutoff moment, so that it may be determined that the common timing-related information that has broadcasted is valid within a duration from the start moment to the valid cutoff moment.

Before the valid cutoff moment, the cell does not need to inform the terminal of the system information update by broadcasting paging, and the terminal does not need to obtain the system information carrying the common timing-related information, to reduce the power consumption, and after the valid cutoff moment, the cell may inform the terminal of the system information update by broadcasting paging, and the terminal may obtain the system information carrying the common timing-related information, to determine new common timing-related information.

FIG. 16 is a schematic flowchart illustrating yet another method for broadcasting common timing-related information according to some embodiments the disclosure. As illustrated in FIG. 16, the valid time-related information includes a valid duration, and the method further includes the following step.

At step S1601, after the valid duration from a start moment, paging is broadcasted in response to system information carrying the common timing-related information being updated.

In some embodiments, the valid time-related information may be the valid duration, so that it may be determined that the common timing-related information that has broadcasted is valid within the valid duration from the start moment.

Within the duration, the cell does not need to inform the terminal of the system information update by broadcasting paging, and the terminal does not need to obtain the system information carrying the common timing-related information, to reduce the power consumption, and after the duration, the cell may inform the terminal of the system information update by broadcasting paging, and the terminal may obtain the system information carrying the common timing-related information, to determine new common timing-related information.

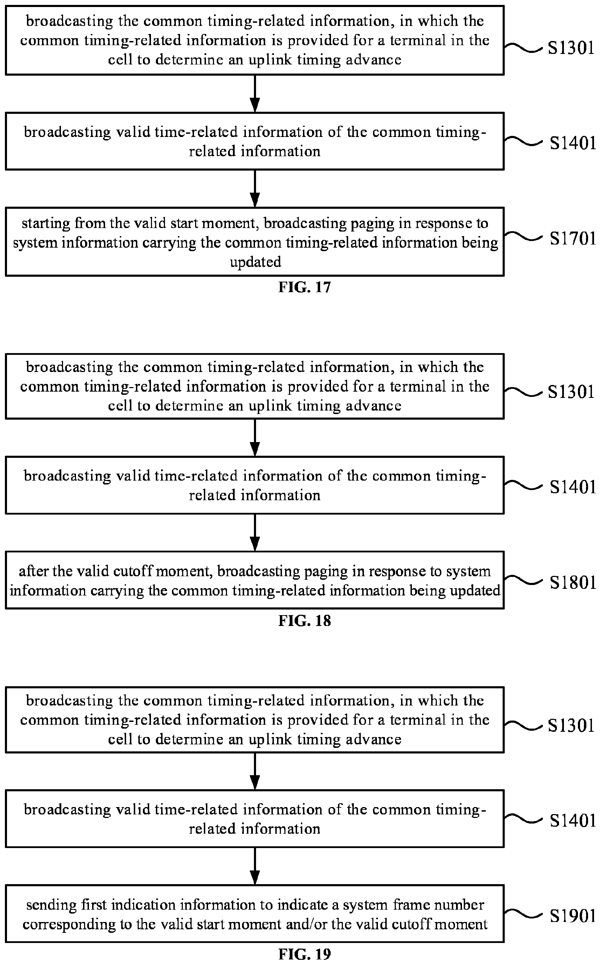

FIG. 17 is a schematic flowchart illustrating yet another method for broadcasting common timing-related information according to some embodiments the disclosure. As illustrated in FIG. 17, the valid time-related information includes a valid start moment, and the method further includes the following step.

At step S1701, starting from the valid start moment, paging is broadcasted in response to system information carrying the common timing-related information being updated.

In some embodiments, the valid time-related information may be the valid start moment, so that it may be determined that the common timing-related information that has broadcasted is valid starting from the valid start moment.

The cell may still broadcast paging starting from the valid start moment, and the terminal may determine whether the system information is updated based on the received paging, and may obtain the system information carrying the common timing-related information in response to determining that the system information is updated, to determine new common timing-related information.

FIG. 18 is a schematic flowchart illustrating yet another method for broadcasting common timing-related information according to some embodiments the disclosure. As illustrated in FIG. 18, the valid time-related information includes a valid start moment and a valid cutoff moment, and the method further includes the following step.

At step S1801, after the valid cutoff moment, paging is broadcasted in response to system information carrying the common timing-related information being updated.

In some embodiments, the valid time-related information may be the valid start moment and the valid cutoff moment, so that it may be determined that the common timing-related information that has broadcasted is valid within the duration from the valid start moment to the valid cutoff moment.

Within the duration, the cell does not need to inform the terminal of the system information update by broadcasting paging, and the terminal does not need to obtain the system information carrying the common timing-related information, to reduce the power consumption, and after the duration, the cell may inform the terminal of the system information update by broadcasting paging, and the terminal may obtain the system information carrying the common timing-related information, to determine new common timing-related information.

FIG. 19 is a schematic flowchart illustrating yet another method for broadcasting common timing-related information according to some embodiments the disclosure. As illustrated in FIG. 19, the valid time-related information includes a valid start moment and/or a valid cutoff moment, and the method further includes the following step.

At step S1901, first indication information is sent to indicate a system frame number corresponding to the valid start moment and/or the valid cutoff moment.

In some embodiments, the cell may indicate the system frame number based on the first indication information, so that the terminal determines the valid start moment and/or the valid cutoff moment, that is, the indicated system frame number is the valid start moment and/or the valid cutoff moment. The system frame number (SFN) may be a single SFN or may be a combination of a hyper SFN and a low SFN. When the valid start moment and/or the valid cutoff moment is indicated in this way, the cell is required to continuously broadcast a current SFN.

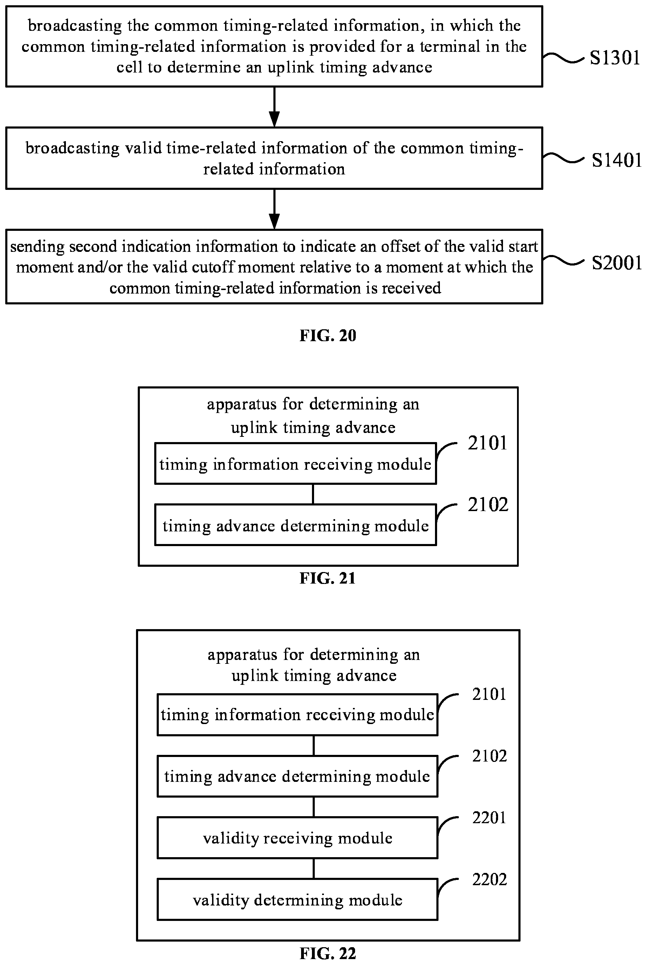

FIG. 20 is a schematic flowchart illustrating yet another method for broadcasting common timing-related information according to some embodiments the disclosure. As illustrated in FIG. 20, the valid time-related information includes a valid start moment and/or a valid cutoff moment, and the method further includes the following step.

At step S2001, second indication information is sent to indicate an offset of the valid start moment and/or the valid cutoff moment relative to a moment at which the common timing-related information is received.

In some embodiments, the cell may indicate the offset based on the second indication information, so that the terminal determines by the valid start moment and/or the valid cutoff moment. The offset indicated is relative to the moment at which the common timing-related information is received.

The moment at which the common timing-related information is received may be same as a definition in the start moment in the above embodiments, which will not be repeated herein.

Corresponding to the foregoing embodiments of the methods for determining an uplink timing advance and the methods for broadcasting common timing-related information, the disclosure also provides some embodiments of apparatuses for determining an uplink timing advance and apparatuses for broadcasting common timing-related information.

FIG. 21 is a schematic block diagram illustrating an apparatus for determining an uplink timing advance according to some embodiments the disclosure. The apparatus for determining an uplink timing advance as illustrated in some embodiments is applicable to a terminal. The terminal includes but is not limited to an electronic device such as a mobile phone, a tablet computer, a wearable device, a sensor or an Internet of Things device. The terminal, as a UE, may communicate with a base station. The base station includes but is not limited to a 4G base station, a 5G base station or a 6G base station. In some embodiments, the base station may be a base station to which an apparatus for broadcasting common timing-related information as described in any subsequent embodiment is applied.

In some embodiments, the terminal and the base station may be located on the ground. The terminal may communicate with the base station through an aerial device. For example, the base station sends information to the aerial device, and the aerial device sends the information to the terminal. The aerial device includes but is not limited to a satellite, a UAV or an aerial platform. The aerial device may move in the air.

A cell described in the following embodiments may refer to a signal coverage area of the aerial device. The base station may send information to the aerial device and the aerial device sends the information to the terminal in the cell by means of broadcasting or unicasting.

As illustrated in FIG. 21, the apparatus for determining an uplink timing advance may include a timing information receiving module 2101 and a timing advance determining module 2102.

The timing information receiving module 2101 is configured to receive common timing-related information broadcasted by a cell.

The timing advance determining module 2102 is configured to determine the uplink timing advance based on the common timing-related information.

In some embodiments, the common timing-related information includes at least one of:
a common timing offset or a time drift rate.

In some embodiments, the timing advance determining module is configured to update the common timing offset based on a common timing offset of a start moment, the time drift rate and a duration from the start moment to a timing advance update moment; and determine the uplink timing advance based on the updated common timing offset.

In some embodiments, the start moment includes at least one of:

a boundary of a system information window located by a moment at which the common timing-related information is received;

a boundary of a nearest system frame number previous to or following a moment at which the common timing-related information is received; or

a boundary of a transmission period of a system information block (SIB1) previous to or following a moment at which the common timing-related information is received, in which the SIB1 is configured to carry the common timing-related information.

In some embodiments, the time drift rate includes a first drift rate and a second drift rate, and the uplink timing advance is further calculated based on a specific timing advance of the terminal. The timing advance determining module is configured to update the specific timing advance of the terminal based on the first drift rate; and determine the uplink timing advance based on the updated specific timing advance of the terminal, the common timing-related information and the second drift rate.

In some embodiments, the uplink timing advance is further calculated based on a specific timing advance of the terminal. The timing advance determining module is configured to update the specific timing advance of the terminal based on the time drift rate; and determine the uplink timing advance based on the updated specific timing advance of the terminal, the common timing-related information and the time drift rate.

FIG. 22 is a schematic block diagram illustrating another apparatus for determining an uplink timing advance according to some embodiments the disclosure. As illustrated in FIG. 22, the apparatus further includes a validity receiving module 2201 and a validity determining module 2202.

The validity receiving module 2201 is configured to receive valid time-related information of the common timing-related information, broadcasted by the cell.

The validity determining module 2202 is configured to determine that common timing-related information that has received is valid based on the valid time-related information.

In some embodiments, the validity determining module is configured to, in response to the valid time-related information being a valid cutoff moment, determine that the common timing-related information that has received is valid within a duration from the start moment to the valid cutoff moment.

In some embodiments, the validity determining module is configured to, in response to the valid time-related information being a valid duration, determine that the common timing-related information that has received is valid within the valid duration from the start moment.

In some embodiments, the validity determining module is configured to, in response to the valid time-related information being a valid start moment, determine that the common timing-related information that has received is valid from the valid start moment.

In some embodiments, the validity determining module is configured to, in response to the valid time-related information being a valid start moment and a valid cutoff moment, determine that the common timing-related information that has received is valid within a duration from the valid start moment to the valid cutoff moment.

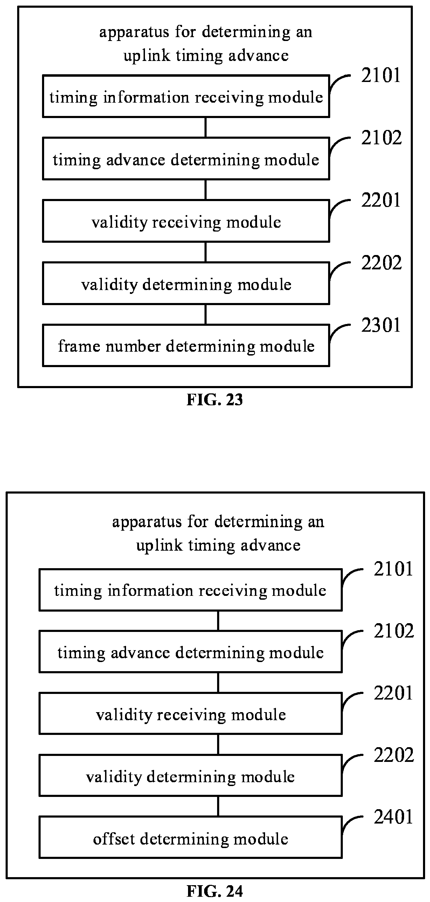

FIG. 23 is a schematic block diagram illustrating yet another apparatus for determining an uplink timing advance according to some embodiments the disclosure. As illustrated in FIG. 23, the valid time-related information includes a valid start moment and/or a valid cutoff moment, and the apparatus further includes a frame number determining module 2301.

The frame number determining module 2301 is configured to determine a system frame number corresponding to the valid start moment and/or the valid cutoff moment based on first indication information sent by the cell.

FIG. 24 is a schematic block diagram illustrating yet another apparatus for determining an uplink timing advance according to some embodiments the disclosure. As illustrated in FIG. 24, the valid time-related information includes a valid start moment and/or a valid cutoff moment, and the apparatus further includes an offset determining module 2401.

The offset determining module 2401 is configured to determine an offset of the valid start moment and/or the valid cutoff moment relative to a moment at which the common timing-related information is received based on second indication information sent by the cell.

In some embodiments, the validity determining module is configured to, in response to a valid cutoff moment in the common timing-related information being an end moment of a system information modification period corresponding to a moment at which the common timing-related information is received, determine that the common timing-related information that has received is valid before the valid cutoff moment.

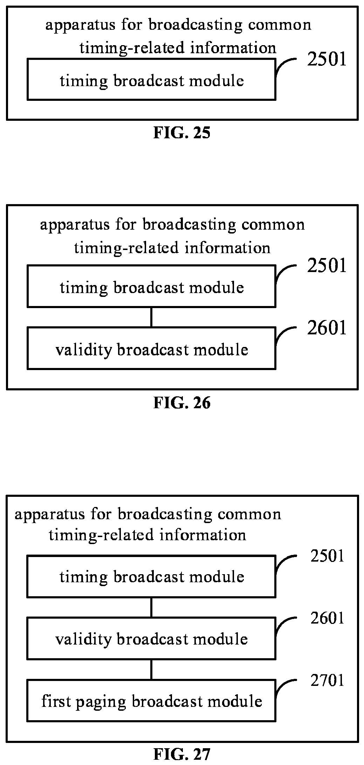

FIG. 25 is a schematic block diagram illustrating an apparatus for broadcasting common timing-related information according to some embodiments the disclosure. The method for broadcasting common timing-related information as illustrated in some embodiments is applicable to a cell, and for example, a network side device corresponding to the cell. The network side device includes but is not limited to a terrestrial base station or an aerial device in a non-terrestrial network. The base station includes but not is limited to a 4G base station, a 5G base station or a 6G base station. The base station may communicate with a terminal as a UE. The terminal includes but is not limited to an electronic device such as a mobile phone, a tablet computer, a wearable device, a sensor or an Internet of things device. In some embodiments, the terminal may be a terminal to which the apparatus for determining an uplink timing advance in any embodiment as described above is applied.

In some embodiments, the terminal and the base station may be located on the ground. The terminal may communicate with the base station through an aerial device. For example, the base station sends information to the aerial device and the aerial device sends the information to the terminal. The aerial device includes but is not limited to a satellite, a UAV or an aerial platform. The aerial device may move in the air.

As illustrated in FIG. 25, the apparatus for broadcasting common timing-related information may include a timing broadcast module 2501.

The timing broadcast module 2501 is configured to broadcast the common timing-related information. The common timing-related information is provided for a terminal in the cell to determine an uplink timing advance.

In some embodiments, the common timing-related information includes at least one of:
a common timing offset or a time drift rate.

FIG. 26 is a schematic block diagram illustrating another apparatus for broadcasting common timing-related information according to some embodiments the disclosure. As illustrated in FIG. 26, the apparatus further includes a validity broadcast module 2601.

The validity broadcast module 2601 is configured to broadcast valid time-related information of the common timing-related information.

FIG. 27 is a schematic block diagram illustrating yet another apparatus for broadcasting common timing-related information according to some embodiments the disclosure. As illustrated in FIG. 27, the valid time-related information includes a valid cutoff moment, and the apparatus further includes a first paging broadcast module 2701.

The first paging broadcast module 2701 is configured to, after the cutoff moment, broadcast paging in response to system information carrying the common timing-related information being updated.

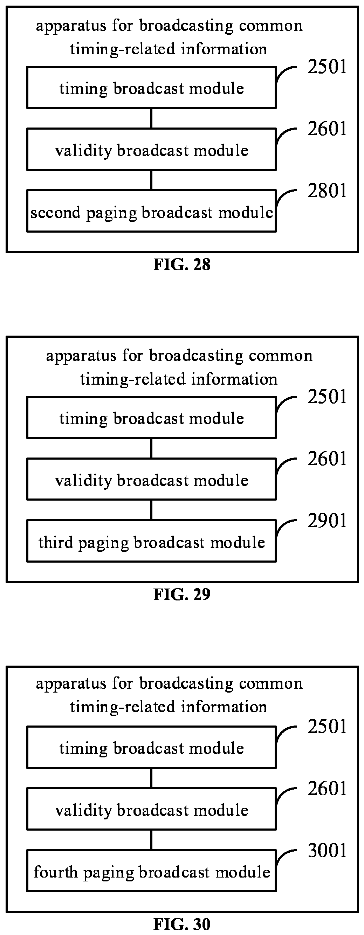

FIG. 28 is a schematic block diagram illustrating yet another apparatus for broadcasting common timing-related information according to some embodiments the disclosure. As illustrated in FIG. 28, the valid time-related information includes a valid duration, and the apparatus further includes a second paging broadcast module 2801.

The second paging broadcast module 2801 is configured to, after the valid duration from the start moment, broadcast paging in response to system information carrying the common timing-related information being updated.

FIG. 29 is a schematic block diagram illustrating yet another apparatus for broadcasting common timing-related information according to some embodiments the disclosure. As illustrated in FIG. 29, the valid time-related information includes a valid start moment, and the apparatus further includes a third paging broadcast module 2901.

The third paging broadcast module 2901 is configured to, starting from the valid start moment, broadcast paging in response to system information carrying the common timing-related information being updated.

FIG. 30 is a schematic block diagram illustrating yet another apparatus for broadcasting common timing-related information according to some embodiments the disclosure. As illustrated in FIG. 30, the valid time-related information includes a valid start moment and a valid cutoff moment, and the apparatus further includes a fourth paging broadcast module 3001.

The fourth paging broadcast module 3001 is configured to, after the valid cutoff moment, broadcast paging in response to system information carrying the common timing-related information being updated.

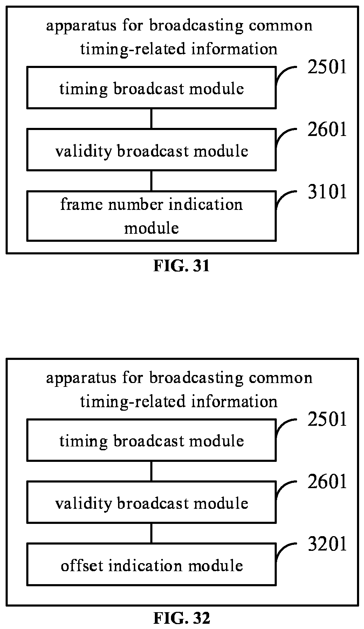

FIG. 31 is a schematic block diagram illustrating yet another apparatus for broadcasting common timing-related information according to some embodiments the disclosure. As illustrated in FIG. 31, the valid time-related information includes a valid start moment and/or a valid cutoff moment, and the apparatus further includes a frame number indication module 3101.

The frame number indication module 3101 is configured to send first indication information to indicate a system frame number corresponding to the valid start moment and/or the valid cutoff moment.

FIG. 32 is a schematic block diagram illustrating yet another apparatus for broadcasting common timing-related information according to some embodiments the disclosure. As illustrated in FIG. 32, the valid time-related information includes a valid start moment and/or a valid cutoff moment, and the apparatus further includes an offset indication module 3201.

The offset indication module 3201 is configured to send second indication information to indicate an offset of the valid start moment and/or the valid cutoff moment relative to a moment at which the common timing-related information is received.

With respect to the apparatuses in the above embodiments, the specific manners for performing operations for individual modules therein have been described in detail in the embodiments regarding the methods, which will not be elaborated herein.

For the apparatus embodiments, since they basically correspond to the method embodiments, reference may be made to the partial descriptions of the method embodiments for related parts. The apparatus embodiments described above are only illustrative, in which modules described as separate components may or may not be physically separated, and components displayed as modules may or may not be physical modules, that is, they may be located in one place or distributed on multiple network modules. Some or all of the modules may be selected according to actual needs to achieve purposes of solutions in embodiments. A person skilled in the art may understand and implement it without creative effort.

According to embodiments of the disclosure, an electronic device is further provided and includes:

a processor; and

a memory for storing instructions executable by the processor.

The processor is configured to perform the method for determining an uplink timing advance as described in the above any one embodiment, and/or the method for broadcasting common timing-related information as described in the above any one embodiment.

According to embodiments of the disclosure, a computer-readable storage medium with a computer program stored thereon is provided. The program implements steps in the method for determining an uplink timing advance and/or in the method for broadcasting common timing-related information when executed by a processor.

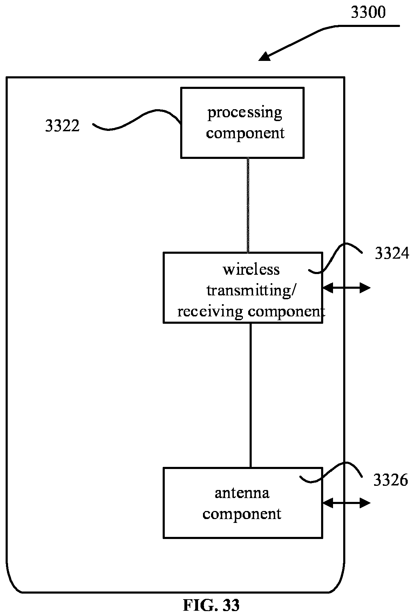

FIG. 33 is a schematic block diagram illustrating a device 3300 for broadcasting common timing-related information according to some embodiments the disclosure. The device 3300 may be provided as a base station. As illustrated in FIG. 33, the device 3300 includes a processing component 3322, a wireless transmitting/receiving component 3324, an antenna component 3326, and a signal processing unit peculiar to a wireless interface. The processing component 3322 may further include one or more processors. One processor of the processing component 3322 may be configured to implement the method for broadcasting common timing-related information as described in the above any embodiment.

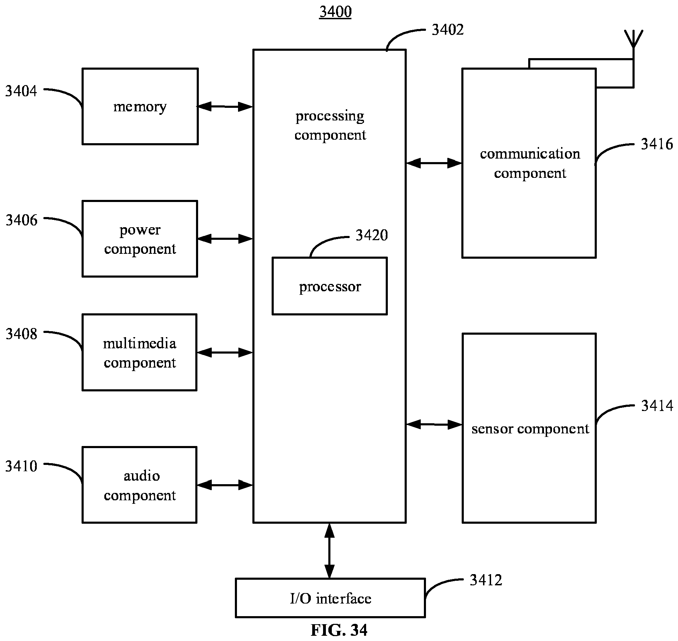

FIG. 34 is a schematic block diagram illustrating a device 3400 for determining an uplink timing advance according to some embodiments the disclosure. For example, the device 3400 may be a mobile phone, a computer, a digital broadcast terminal, a messaging device, a gaming console, a tablet, a medical device, exercise equipment, a personal digital assistant, and the like.

Referring to FIG. 34, the device 3400 may include one or more of the following components: a processing component 3402, a memory 3404, a power component 3406, a multimedia component 3408, an audio component 3410, an input/output (I/O) interface 3412, a sensor component 3414, and a communication component 3416.

The processing component 3402 typically controls overall operations of the device 3400, such as the operations associated with display, telephone calls, data communications, camera operations, and recording operations. The processing component 3402 may include one or more processors 3420 to execute instructions to perform all or part of the steps in the above described methods for determining an uplink timing advance. Moreover, the processing component 3402 may include one or more modules which facilitate the interaction between the processing component 3402 and other components. For instance, the processing component 3402 may include a multimedia module to facilitate the interaction between the multimedia component 3408 and the processing component 3402.

The memory 3404 is configured to store various types of data to support the operation of the device 3400. Examples of such data include instructions for any applications or methods operated on the device 3400, contact data, phonebook data, messages, pictures, video, etc. The memory 3404 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 3406 provides power to various components of the device 3400. The power component 3406 may include a power management system, one or more power sources, and any other components associated with the generation, management, and distribution of power in the device 3400.

The multimedia component 3408 includes a screen providing an output interface between the device 3400 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 3408 includes a front camera and/or a rear camera. The front camera and the rear camera may receive an external multimedia datum while the device 3400 is in an operation mode, such as a photographing mode or a video mode. Each of the front camera and the rear camera may be a fixed optical lens system or have focus and optical zoom capability.

The audio component 3410 is configured to output and/or input audio signals. For example, the audio component 3410 includes a microphone ("MIC") configured to receive an external audio signal when the device 3400 is in an operation mode, such as a call mode, a recording mode, and a voice recognition mode. The received audio signal may be further stored in the memory 3404 or transmitted via the communication component 3416. In some embodiments, the audio component 3410 further includes a speaker to output audio signals.

The I/O interface 3412 provides an interface between the processing component 3402 and peripheral interface modules, such as a keyboard, a click wheel, buttons, and the like. The buttons may include, but are not limited to, a home button, a volume button, a starting button, and a locking button.

The sensor component 3414 includes one or more sensors to provide status assessments of various aspects of the device 3400. For instance, the sensor component 3414 may detect an open/closed status of the device 3400, relative positioning of components, e.g., the display and the keypad, of the device 3400, a change in position of the device 3400 or a component of the device 3400, a presence or absence of user contact with the device 3400, an orientation or an acceleration/deceleration of the device 3400, and a change in temperature of the device 3400. The sensor component 3414 may include a proximity sensor configured to detect the presence of nearby objects without any physical contact. The sensor component 3414 may also include a light sensor, such as a CMOS or CCD image sensor, for use in imaging applications. In some embodiments, the sensor component 3414 may also include an accelerometer sensor, a gyroscope sensor, a magnetic sensor, a pressure sensor, or a temperature sensor.

The communication component 3416 is configured to facilitate communication, wired or wirelessly, between the device 3400 and other devices. The device 3400 may access a wireless network based on a communication standard, such as Wi-Fi, second generation (2G) or third generation (3G), fourth generation (4G) Long Term Evolution (LTE), fifth generation (5G) new radio (NR), or a combination thereof. In some embodiments, the communication component 3416 receives a broadcast signal or broadcast associated information from an external broadcast management system via a broadcast channel. In some embodiments, the communication component 3416 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In some embodiments, the device 3400 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In some embodiments, there is also provided a non-transitory computer-readable storage medium including instructions, such as included in the memory 3404, executable by the processor 3420 in the device 3400, for performing the above-described methods. For example, the non-transitory computer-readable storage medium may be a ROM, a RAM, a CD-ROM, a magnetic tape, a floppy disc, an optical data storage device, and the like.

Other embodiments of the disclosure will be apparent to a person skilled in the art from consideration of the specification and practice of the disclosure disclosed here. This application is intended to cover any variations, uses, or adaptations of the disclosure following the general principles thereof and including such departures from the disclosure as come within known or customary practice in the art. It is intended that the specification and examples be considered as exemplary only, with a true scope and spirit of the disclosure being indicated by the following claims.

It will be appreciated that the disclosure is not limited to the exact construction that has been described above and illustrated in the accompanying drawings, and that various modifications and changes may be made without departing from the scope thereof. It is intended that the scope of the disclosure only be limited by the appended claims.

It should be noted that, in the disclosure, relational terms such as first and second are used only to distinguish one entity or operation from another entity or operation, and do not necessarily require or imply any such actual relationship or sequence exists between these entities or operations. The terms "comprising", "including" or any other variation thereof are intended to encompass non-exclusive inclusion such that a process, method, article, or device including a list of elements includes not only those elements, but also other elements not expressly listed, or also include elements inherent to such the process, method, article, or device. Without further limitation, an element qualified by the phrase " including a..." does not preclude the presence of additional identical elements in the process, method, article, or device that includes the element.

The methods and apparatuses or devices provided by embodiments of the disclosure have been described in detail above, and specific examples are used to illustrate the principles and implementations of the disclosure. At the same time, for a person skilled in the art, according to the idea of the disclosure, there will be changes in the specific implementation and application scope. In summary, the content of this specification should not be construed as limiting the disclosure.

**Claims**

1.  A method for determining an uplink timing advance, applicable to a terminal, the method comprising:

    receiving common timing-related information broadcasted by a cell; and
    determining the uplink timing advance based on the common timing-related information.

2.  The method of claim 1, wherein the common timing-related information comprises at least one of:
    a common timing offset or a time drift rate.

3.  The method of claim 2, wherein determining the uplink timing advance based on the common timing-related information comprises:

    updating the common timing offset based on a common timing offset of a start moment, the time drift rate and a duration from the start moment to a timing advance update moment; and
    determining the uplink timing advance based on the updated common timing offset.

4.  The method of claim 3, wherein the start moment comprises at least one of:

    a boundary of a system information window located by a moment at which the common timing-related information is received;
    a boundary of a nearest system frame number previous to or following a moment at which the common timing-related information is received; or
    a boundary of a transmission period of a system information block (SIB1) previous to or following a moment at which the common timing-related information is received, wherein the SIB1 is configured to carry the common timing-related information.

**5.** The method of claim 3, wherein the time drift rate comprises a first drift rate and a second drift rate, and the uplink timing advance is further calculated based on a specific timing advance of the terminal, and determining the uplink timing advance based on the common timing-related information comprises:

updating the specific timing advance of the terminal based on the first drift rate; and
determining the uplink timing advance based on the updated specific timing advance of the terminal, the common timing-related information and the second drift rate.

**6.** The method of claim 3, wherein the uplink timing advance is further calculated based on a specific timing advance of the terminal, and determining the uplink timing advance based on the common timing-related information comprises:

updating the specific timing advance of the terminal based on the time drift rate; and
determining the uplink timing advance based on the updated specific timing advance of the terminal, the common timing-related information and the time drift rate.

**7.** The method of any one of claims 1 to 6, further comprising:

receiving valid time-related information of the common timing-related information, broadcasted by the cell; and
determining that common timing-related information that has received is valid based on the valid time-related information.

**8.** The method of claim 7, wherein determining that the common timing-related information that has received is valid based on the valid time-related information comprises:
in response to the valid time-related information being a valid cutoff moment, determining that the common timing-related information that has received is valid within a duration from a start moment to the valid cutoff moment.

**9.** The method of claim 7, wherein determining that the common timing-related information that has received is valid based on the valid time-related information comprises:
in response to the valid time-related information being a valid duration, determining that the common timing-related information that has received is valid within the valid duration from a start moment.

**10.** The method of claim 7, wherein determining that the common timing-related information that has received is valid based on the valid time-related information comprises:
in response to the valid time-related information being a valid start moment, determining that the common timing-related information that has received is valid from the valid start moment.

**11.** The method of claim 7, wherein determining that the common timing-related information that has received is valid based on the valid time-related information comprises:
in response to the valid time-related information being a valid start moment and a valid cutoff moment, determining that the common timing-related information that has received is valid within a duration from the valid start moment to the valid cutoff moment.

**12.** The method of claim 7, wherein the valid time-related information comprises a valid start moment and/or a valid cutoff moment, and the method further comprises:
determining a system frame number corresponding to the valid start moment and/or the valid cutoff moment based on first indication information sent by the cell.

**13.** The method of claim 7, wherein the valid time-related information comprises a valid start moment and/or a valid cutoff moment, and the method further comprises:
determining an offset of the valid start moment and/or the valid cutoff moment relative to a moment at which the common timing-related information is received based on second indication information sent by the cell.

**14.** The method of claim 7, wherein determining that the common timing-related information that has received is valid based on the valid time-related information comprises:
in response to a valid cutoff moment in the common timing-related information being an end moment of a system information modification period corresponding to a moment at which the common timing-related information is received, determining that the common timing-related information that has received is valid before the valid cutoff moment.

**15.** A method for broadcasting common timing-related information, applicable to a cell, the method comprising:
broadcasting the common timing-related information, wherein the common timing-related information is provided for a terminal in the cell to determine an uplink timing advance.

**16.** The method of claim 15, wherein the common timing-related information comprises at least one of:

a common timing offset or a time drift rate.

17. The method of any one of claims 15 to 16, further comprising:
broadcasting valid time-related information of the common timing-related information.

18. The method of claim 17, wherein the valid time-related information is a valid cutoff moment, and the method further comprises:
after the cutoff moment, broadcasting paging in response to system information carrying the common timing-related information being updated.

19. The method of claim 17, wherein the valid time-related information is a valid duration, and the method further comprises:
after the valid duration from a start moment, broadcasting paging in response to system information carrying the common timing-related information being updated.

20. The method of claim 17, wherein the valid time-related information is a valid start moment, and the method further comprises:
starting from the valid start moment, broadcasting paging in response to system information carrying the common timing-related information being updated.

21. The method of claim 17, wherein the valid time-related information comprises a valid start moment and a valid cutoff moment, and the method further comprises:
after the valid cutoff moment, broadcasting paging in response to system information carrying the common timing-related information being updated.

22. The method of claim 17, wherein the valid time-related information comprises a valid start moment and/or a valid cutoff moment, and the method further comprises:
sending first indication information to indicate a system frame number corresponding to the valid start moment and/or the valid cutoff moment.

23. The method of claim 17, wherein the valid time-related information comprises a valid start moment and/or a valid cutoff moment, and the method further comprises:
sending second indication information to indicate an offset of the valid start moment and/or the valid cutoff moment relative to a moment at which the common timing-related information is received.

24. An apparatus for determining an uplink timing advance, applicable to a terminal, the apparatus comprising:

a timing information receiving module, configured to receive common timing-related information broadcasted by a cell; and
a timing advance determining module, configured to determine the uplink timing advance based on the common timing-related information.

25. An apparatus for broadcasting common timing-related information, applicable to a cell, the apparatus comprising:
a timing broadcast module, configured to broadcast the common timing-related information, wherein the common timing-related information is provided for a terminal in the cell to determine an uplink timing advance.

26. An electronic device, comprising:

a processor; and
a memory for storing instructions executable by the processor;
wherein the processor is configured to perform the method for determining an uplink timing advance according to any one of claims 1 to 14, and/or the method for broadcasting common timing-related information according to any one of claims 15 to 23.

27. A computer-readable storage medium with a computer program stored thereon, wherein the program is configured to implement the method for determining an uplink timing advance according to any one of claims 1 to 14, and/or the method for broadcasting common timing-related information according to any one of claims 15 to 23 when executed by a processor.

receiving common timing-related information broadcasted by a cell ~ S101

↓

determining the uplink timing advance based on the common timing-related information ~ S102

**FIG. 1**

receiving common timing-related information broadcasted by a cell ~ S101

↓

updating the common timing offset based on a common timing offset of a start moment, the time drift rate and a duration from the start moment to a timing advance update moment ~ S201

↓

determining the uplink timing advance based on the updated common timing offset ~ S202

**FIG. 2**

| | |
|---|---|
| receiving common timing-related information broadcasted by a cell | S101 |

↓

| | |
|---|---|
| determining the uplink timing advance based on the common timing-related information | S102 |

↓

| | |
|---|---|
| receiving valid time-related information of the common timing-related information, broadcasted by the cell | S301 |

↓

| | |
|---|---|
| determining that common timing-related information that has received is valid based on the valid time-related information | S302 |

**FIG. 3**

| | |
|---|---|
| receiving common timing-related information broadcasted by a cell | S101 |

↓

| | |
|---|---|
| determining the uplink timing advance based on the common timing-related information | S102 |

↓

| | |
|---|---|
| receiving valid time-related information of the common timing-related information, broadcasted by the cell | S301 |

↓

| | |
|---|---|
| in response to the valid time-related information being a valid cutoff moment, determining that the common timing-related information that has received is valid within a duration from a start moment to the valid cutoff moment | S401 |

**FIG. 4**

```
┌──────────────────────────────────────────────────────────┐
│ receiving common timing-related information broadcasted by a cell │ ⌇ S101
└──────────────────────────────────────────────────────────┘
                              │
                              ▼
┌──────────────────────────────────────────────────────────┐
│ determining the uplink timing advance based on the common timing- │ ⌇ S102
│                   related information                      │
└──────────────────────────────────────────────────────────┘
                              │
                              ▼
┌──────────────────────────────────────────────────────────┐
│ receiving valid time-related information of the common timing-related │ ⌇ S301
│         information, broadcasted by the cell              │
└──────────────────────────────────────────────────────────┘
                              │
                              ▼
┌──────────────────────────────────────────────────────────┐
│ in response to the valid time-related information being a valid duration, │ ⌇ S501
│ determining that the common timing-related information that has received │
│        is valid within the valid duration from a start moment │
└──────────────────────────────────────────────────────────┘
```

**FIG. 5**

```
┌──────────────────────────────────────────────────────────┐
│ receiving common timing-related information broadcasted by a cell │ ⌇ S101
└──────────────────────────────────────────────────────────┘
                              │
                              ▼
┌──────────────────────────────────────────────────────────┐
│ determining the uplink timing advance based on the common timing- │ ⌇ S102
│                   related information                      │
└──────────────────────────────────────────────────────────┘
                              │
                              ▼
┌──────────────────────────────────────────────────────────┐
│ receiving valid time-related information of the common timing-related │ ⌇ S301
│         information, broadcasted by the cell              │
└──────────────────────────────────────────────────────────┘
                              │
                              ▼
┌──────────────────────────────────────────────────────────┐
│ in response to the valid time-related information being a valid start │ ⌇ S601
│ moment, determining that the common timing-related information that has │
│        received is valid from the valid start moment     │
└──────────────────────────────────────────────────────────┘
```

**FIG. 6**

receiving common timing-related information broadcasted by a cell — S101

determining the uplink timing advance based on the common timing-related information — S102

receiving valid time-related information of the common timing-related information, broadcasted by the cell — S301

in response to the valid time-related information being a valid start moment and a valid cutoff moment, determining that the common timing-related information that has received is valid within a duration from the valid start moment to the valid cutoff moment — S701

**FIG. 7**

receiving common timing-related information broadcasted by a cell — S101

determining the uplink timing advance based on the common timing-related information — S102

receiving valid time-related information of the common timing-related information, broadcasted by the cell — S301

determining that common timing-related information that has received is valid based on the valid time-related information — S302

determining a system frame number corresponding to the valid start moment and/or the valid cutoff moment based on first indication information sent by the cell — S801

**FIG. 8**

```
┌─────────────────────────────────────────────────────────┐
│  receiving common timing-related information broadcasted by a cell  │ ∿ S101
└─────────────────────────────────────────────────────────┘
                              │
                              ▼
┌─────────────────────────────────────────────────────────┐
│  determining the uplink timing advance based on the common timing-  │ ∿ S102
│                   related information                     │
└─────────────────────────────────────────────────────────┘
                              │
                              ▼
┌─────────────────────────────────────────────────────────┐
│  receiving valid time-related information of the common timing-related  │ ∿ S301
│            information, broadcasted by the cell           │
└─────────────────────────────────────────────────────────┘
                              │
                              ▼
┌─────────────────────────────────────────────────────────┐
│  determining that common timing-related information that has received is  │ ∿ S302
│          valid based on the valid time-related information  │
└─────────────────────────────────────────────────────────┘
                              │
                              ▼
┌─────────────────────────────────────────────────────────┐
│  determining an offset of the valid start moment and/or the valid cutoff  │ ∿ S901
│     moment relative to a moment at which the common timing-related  │
│  information is received based on second indication information sent by the  │
│                           cell                           │
└─────────────────────────────────────────────────────────┘
```

**FIG. 9**

receiving common timing-related information broadcasted by a cell ~ S101

determining the uplink timing advance based on the common timing-related information ~ S102

receiving valid time-related information of the common timing-related information, broadcasted by the cell ~ S301

in response to a valid cutoff moment in the common timing-related information being an end moment of a system information modification period corresponding to a moment at which the common timing-related information is received, determining that the common timing-related information that has received is valid before the valid cutoff moment ~ S1002

**FIG. 10**

receiving common timing-related information broadcasted by a cell ~ S101

updating the specific timing advance of the terminal based on the first drift rate ~ S1101

determining the uplink timing advance based on the updated specific timing advance of the terminal, the common timing-related information and the second drift rate ~ S1102

**FIG. 11**

receiving common timing-related information broadcasted by a cell — S101

updating the specific timing advance of the terminal based on the time drift rate — S1201

determining the uplink timing advance based on the updated specific timing advance of the terminal, the common timing-related information and the time drift rate — S1202

**FIG. 12**

broadcasting the common timing-related information, in which the common timing-related information is provided for a terminal in the cell to determine an uplink timing advance — S1301

**FIG. 13**

broadcasting the common timing-related information, in which the common timing-related information is provided for a terminal in the cell to determine an uplink timing advance — S1301

broadcasting valid time-related information of the common timing-related information — S1401

**FIG. 14**

broadcasting the common timing-related information, in which the common timing-related information is provided for a terminal in the cell to determine an uplink timing advance — S1301

broadcasting valid time-related information of the common timing-related information — S1401

after the cutoff moment, broadcasting paging in response to system information carrying the common timing-related information being updated — S1501

**FIG. 15**

broadcasting the common timing-related information, in which the common timing-related information is provided for a terminal in the cell to determine an uplink timing advance — S1301

broadcasting valid time-related information of the common timing-related information — S1401

after the valid duration from a start moment, broadcasting paging in response to system information carrying the common timing-related information being updated — S1601

**FIG. 16**

broadcasting the common timing-related information, in which the common timing-related information is provided for a terminal in the cell to determine an uplink timing advance — S1301

broadcasting valid time-related information of the common timing-related information — S1401

starting from the valid start moment, broadcasting paging in response to system information carrying the common timing-related information being updated — S1701

**FIG. 17**

broadcasting the common timing-related information, in which the common timing-related information is provided for a terminal in the cell to determine an uplink timing advance — S1301

broadcasting valid time-related information of the common timing-related information — S1401

after the valid cutoff moment, broadcasting paging in response to system information carrying the common timing-related information being updated — S1801

**FIG. 18**

broadcasting the common timing-related information, in which the common timing-related information is provided for a terminal in the cell to determine an uplink timing advance — S1301

broadcasting valid time-related information of the common timing-related information — S1401

sending first indication information to indicate a system frame number corresponding to the valid start moment and/or the valid cutoff moment — S1901

**FIG. 19**

broadcasting the common timing-related information, in which the common timing-related information is provided for a terminal in the cell to determine an uplink timing advance ⟩～ S1301

broadcasting valid time-related information of the common timing-related information ⟩～ S1401

sending second indication information to indicate an offset of the valid start moment and/or the valid cutoff moment relative to a moment at which the common timing-related information is received ⟩～ S2001

**FIG. 20**

apparatus for determining an uplink timing advance

timing information receiving module ⟩⟨ 2101

timing advance determining module ⟩⟨ 2102

**FIG. 21**

apparatus for determining an uplink timing advance

timing information receiving module ⟩⟨ 2101

timing advance determining module ⟩⟨ 2102

validity receiving module ⟩⟨ 2201

validity determining module ⟩⟨ 2202

**FIG. 22**

apparatus for determining an
uplink timing advance

| timing information receiving module | 2101 |

| timing advance determining module | 2102 |

| validity receiving module | 2201 |

| validity determining module | 2202 |

| frame number determining module | 2301 |

**FIG. 23**

apparatus for determining an
uplink timing advance

| timing information receiving module | 2101 |

| timing advance determining module | 2102 |

| validity receiving module | 2201 |

| validity determining module | 2202 |

| offset determining module | 2401 |

**FIG. 24**

apparatus for broadcasting common
timing-related information

timing broadcast module — 2501

**FIG. 25**

apparatus for broadcasting common
timing-related information

timing broadcast module — 2501

validity broadcast module — 2601

**FIG. 26**

apparatus for broadcasting common
timing-related information

timing broadcast module — 2501

validity broadcast module — 2601

first paging broadcast module — 2701

**FIG. 27**

apparatus for broadcasting common timing-related information

timing broadcast module ⌐ 2501

validity broadcast module ⌐ 2601

second paging broadcast module ⌐ 2801

**FIG. 28**

apparatus for broadcasting common timing-related information

timing broadcast module ⌐ 2501

validity broadcast module ⌐ 2601

third paging broadcast module ⌐ 2901

**FIG. 29**

apparatus for broadcasting common timing-related information

timing broadcast module ⌐ 2501

validity broadcast module ⌐ 2601

fourth paging broadcast module ⌐ 3001

**FIG. 30**

apparatus for broadcasting common
timing-related information

timing broadcast module — 2501

validity broadcast module — 2601

frame number indication
module — 3101

**FIG. 31**

apparatus for broadcasting common
timing-related information

timing broadcast module — 2501

validity broadcast module — 2601

offset indication module — 3201

**FIG. 32**

3300

3322

processing
component

3324

wireless
transmitting/
receiving component

3326

antenna
component

**FIG. 33**

3400

3402

3404 memory

3406 power component

3408 multimedia component

3410 audio component

processing component

3420 processor

3416 communication component

3414 sensor component

3412 I/O interface

**FIG. 34**

## INTERNATIONAL SEARCH REPORT

| | International application No. |
|---|---|
| | **PCT/CN2020/142556** |

| A. | CLASSIFICATION OF SUBJECT MATTER |
|---|---|
| | H04W 56/00(2009.01)i |

According to International Patent Classification (IPC) or to both national classification and IPC

| B. | FIELDS SEARCHED |
|---|---|

Minimum documentation searched (classification system followed by classification symbols)

H04W; H04Q; H04L

Documentation searched other than minimum documentation to the extent that such documents are included in the fields searched

Electronic data base consulted during the international search (name of data base and, where practicable, search terms used)

CNKI, CNPAT, WPI, EPODOC, 3GPP: 非地面网络, 上行, 时间, 提前, 广播, 公共, 随机, 接入, 信道, 距离, 参考点, 卫星, 漂移, NTN, uplink, timing, advance, TA, broadcast+, RTT, SIB, common, random, access, channel, PRACH, distance, reference, satellite, drift

| C. | DOCUMENTS CONSIDERED TO BE RELEVANT |
|---|---|

| Category* | Citation of document, with indication, where appropriate, of the relevant passages | Relevant to claim No. |
|---|---|---|
| X | APPLE. "On Timing Advance for NTN" *3GPP TSG RAN WG1 #102-e R1-2006520*, 28 August 2020 (2020-08-28), sections 2.1-2.2 | 1-27 |
| A | WO 2020204421 A1 (SAMSUNG ELECTRONICS CO., LTD.) 08 October 2020 (2020-10-08) entire document | 1-27 |
| A | WO 2020154744 A1 (APPLE INC.) 30 July 2020 (2020-07-30) entire document | 1-27 |
| A | CN 111565472 A (TELECOMMUNICATIONS TECHNOLOGY RESEARCH INSTITUTE CO., LTD.) 21 August 2020 (2020-08-21) entire document | 1-27 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **03 September 2021** | **28 September 2021** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT
### Information on patent family members

| International application No. |
| --- |
| **PCT/CN2020/142556** |

| Patent document cited in search report | Publication date (day/month/year) | Patent family member(s) | Publication date (day/month/year) |
| --- | --- | --- | --- |
| WO 2020204421 A1 | 08 October 2020 | GB 2582662 A | 30 September 2020 |
| | | GB 201904465 D0 | 15 May 2019 |
| WO 2020154744 A1 | 30 July 2020 | None | |
| CN 111565472 A | 21 August 2020 | None | |

Form PCT/ISA/210 (patent family annex) (January 2015)